# EUROPEAN PATENT SPECIFICATION

(11) **EP 3 604 960 B1**
(45) Date of publication and mention of the grant of the patent: **21.02.2024**
(21) Application number: 19187445.2
(22) Date of filing: 19.07.2019
(51) Int. Cl.: F24F 11/77, F24F 11/79, F24F 110/10, F24F 110/20, F24F 110/40

(54) **FAN CONTROL APPARATUS AND FAN CONTROL METHOD**
STEUERUNGSVORRICHTUNG FÜR EIN GEBLÄSE UND VERFAHREN ZUR STEUERUNG EINES GEBLÄSES
APPAREIL DE COMMANDE DE VENTILATEUR ET PROCÉDÉ DE COMMANDE DE VENTILATEUR

(30) Priority: 31.07.2018 JP 2018144536
(43) Date of publication of application: 05.02.2020
(73) Proprietor: Sanyo Denki Co., Ltd., Toshima-ku, Tokyo 170-8451 (JP)
(72) Inventor: MURAKAMI, Naoki, Tokyo, 170-8451 (JP); OSAWA, Honami, Tokyo, 170-8451 (JP); ARAKI, Souma, Tokyo, 170-8451 (JP); MURAKAMI, Masashi, Tokyo, 170-8451 (JP)
(74) Representative: Mathys & Squire

(56) References cited:
- WO-A1-00/17583
- WO-A1-2014/140205
- WO-A2-2015/171051
- WO-A2-2017/020889
- US-A1- 2015 105 009
- US-B2- 8 087 980

## Description

### BACKGROUND

### 1. Technical Field

The present invention relates to fan control system and a fan control method.

### 2. Related Art

An automatic RF fan control technology using a sensor is well known as a cooling technology using a fan (refer to, for example, JP-A-2012-222048).

WO 00/17583 describes a heat transfer apparatus for heating a living space in a building, the apparatus comprising: air transfer means arranged within a roof space of the building for transferring warm air from within the roof space into a living space below; an electric fan arranged to force air through said air transfer means into the living space; a first temperature sensor within the roof space for sensing a first air temperature within the roof space; a second temperature sensor within the living space for sensing a second air temperature within the living space; and an electronic controller operatively connected to said electric fan and said first and second temperature sensors, and wherein said controller ensures that the electric fan is only activated when the first air temperature exceeds the second air temperature by a first predetermined temperature difference whereby, in use, warm air transferred from the roof space is able to heat the living space.

WO 2017/020889 describes a method for operating a decentralised device for controlled room ventilation, the device comprising a flow duct extending between a room to be aerated and vented and the outdoor air, in which duct a ventilator, which is reversible between an aeration operation and an venting operation, and a heat reservoir, through which the conveyed air flows in order to reduce the heat loss of the exhaust air, are provided, where the reversible ventilator can be switched periodically between aeration and venting in at least one operating mode of the device and in the operating mode with periodic switching between aeration and venting, the duration of the ventilation and/or evacuation phases is varied according to at least one environment parameter or operating parameter.

### SUMMARY

A fan control system according to the present disclosure is defined in claim 1. The system includes: a first sensor; a second sensor; a reversible flow (RF) fan; and a controller. The first sensor is provided in a first room, and is configured to acquire a measured value of atmospheric pressure for the first room, the second sensor is provided in a second room adjacent to the first room, and is configured to acquire a measured value of atmospheric pressure for the second room, the reversible flow fan is placed at a boundary between the first and second rooms and is configured to output an reversible flow fan rotation signal regarding its rotational speed and rotational direction, and the controller is configured to receive the measured values from each of the first and second sensors and the reversible flow fan rotational signal from the reversible fan and, with reference to received measured values and the rotational speed and rotational direction of the reversible flow fan based on received reversible flow fan rotation signal, to control the rotational speed and rotational direction of the reversible flow fan in such a manner that the measured values of the first and second sensors are the same.

In a second aspect, the present disclosure provides a fan control method as defined in claim 2.

### BRIEF DESCRIPTION OF THE DRAWINGS

Fig. 1 is a diagram illustrating an example of the configuration of a fan control system according to the present disclosure;
Fig. 2 is a diagram illustrating an example of changes over time in the forward and reverse rotational speed of an RF fan in fan control;
Fig. 3 is a diagram illustrating an example of changes over time in the atmospheric pressures (hPa) measured by a pressure sensor A placed in a room A and a pressure sensor B placed in a room B;
Fig. 4 is a flowchart diagram illustrating the flow of control of the RF fan by a controller of the fan control system according to an exemplary process not covered by the present invention; and
Fig. 5 is a diagram illustrating an example of the configuration of a standard fan control apparatus.

### DETAILED DESCRIPTION

In the following detailed description, for purpose of explanation, numerous specific details are set forth in order to provide a thorough understanding of the disclosed system and/or method. It will be apparent, however, that one or more systems and/or methods according to claims 1 and 2 may be practiced without these specific details. In other instances, well-known structures and devices are schematically shown in order to simplify the drawing.

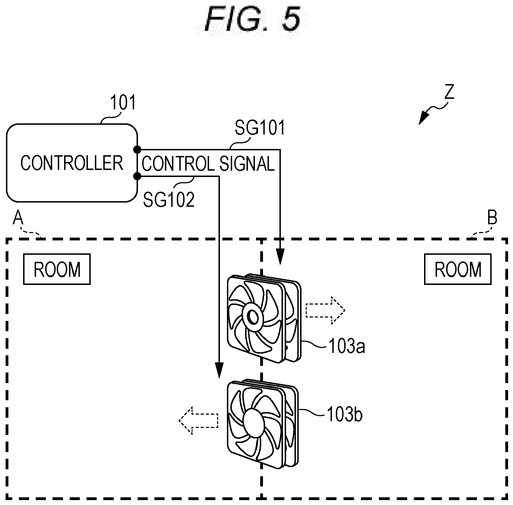

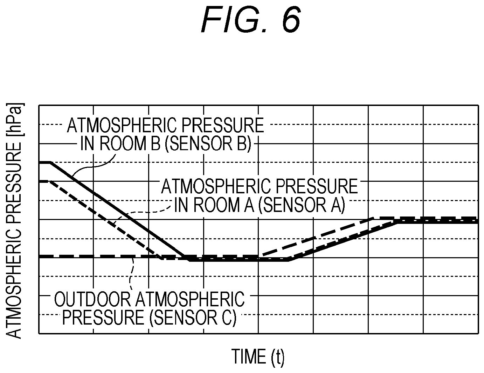

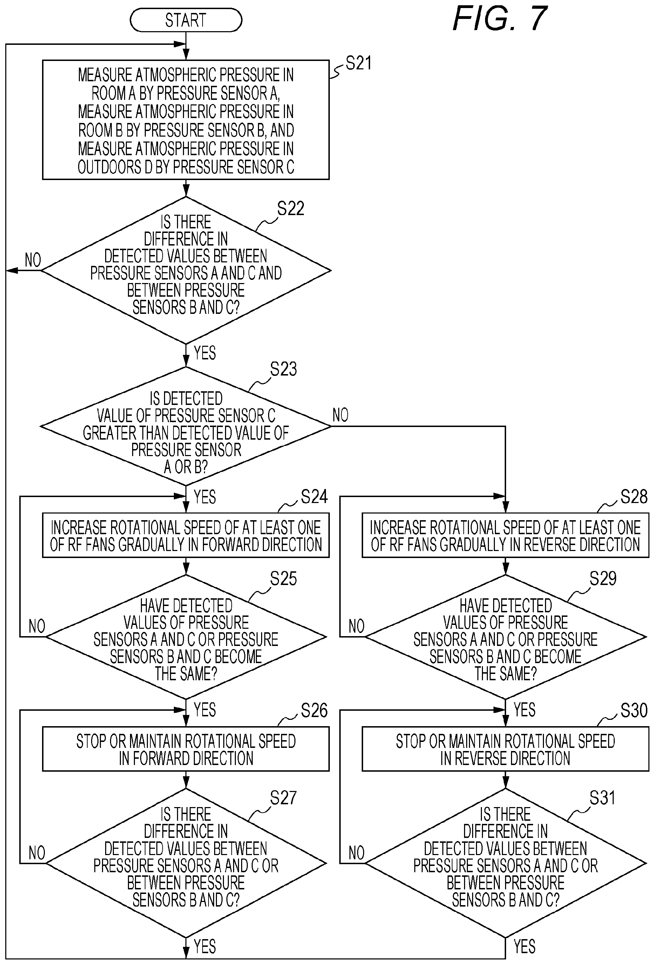

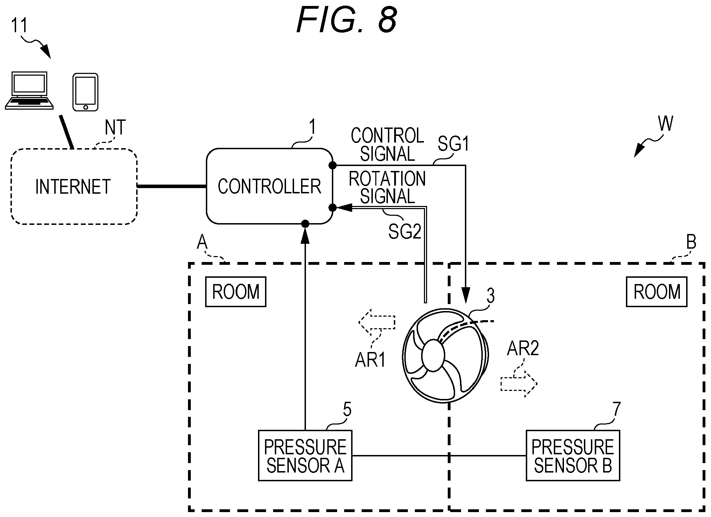

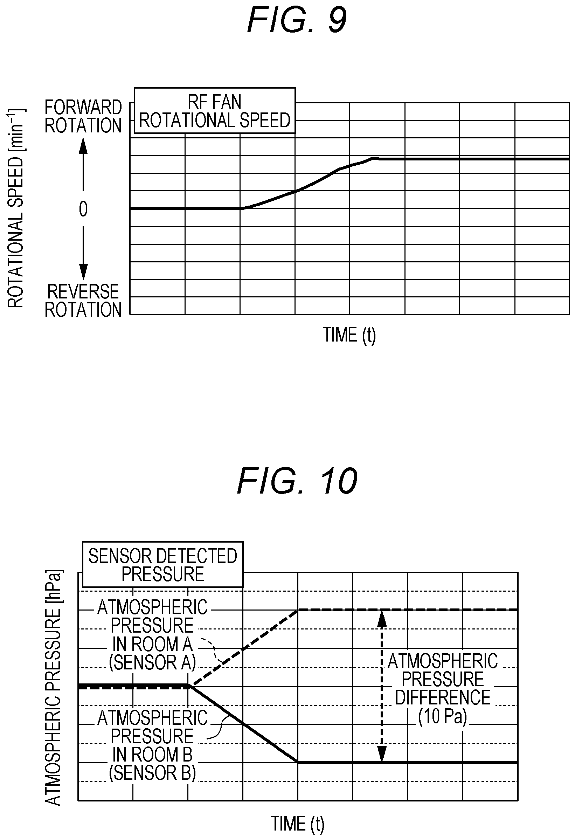

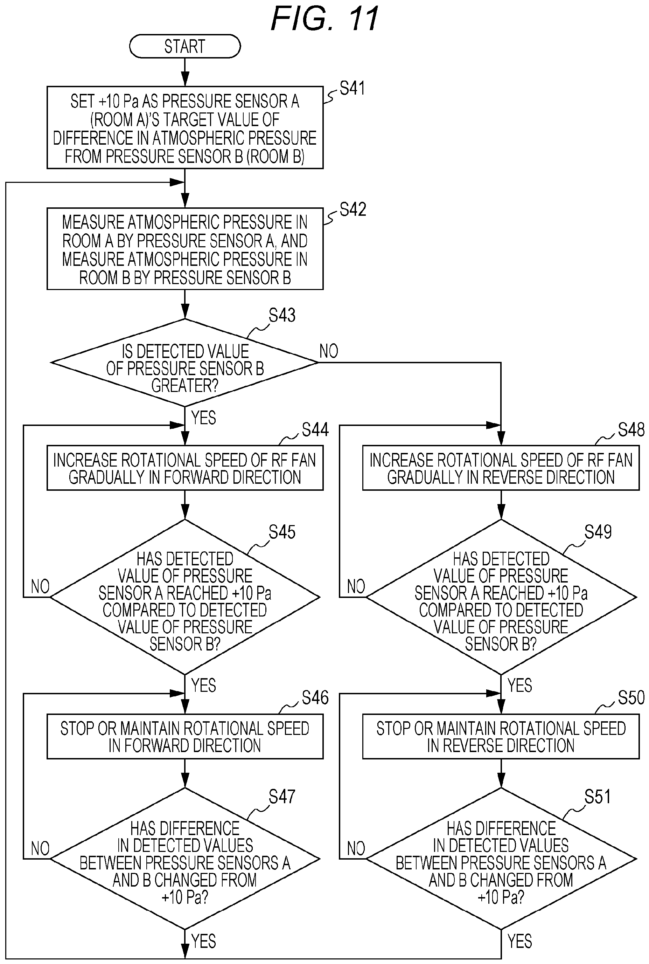

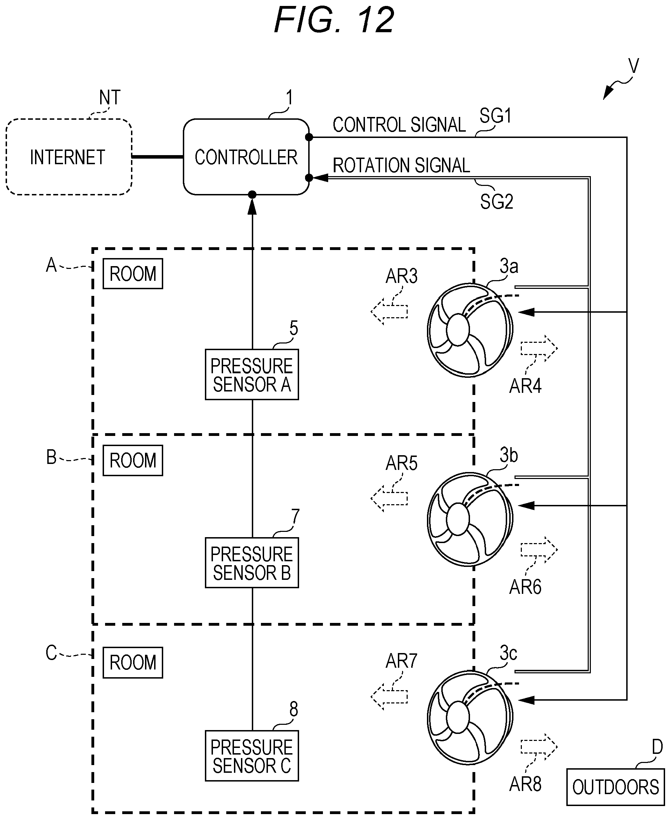

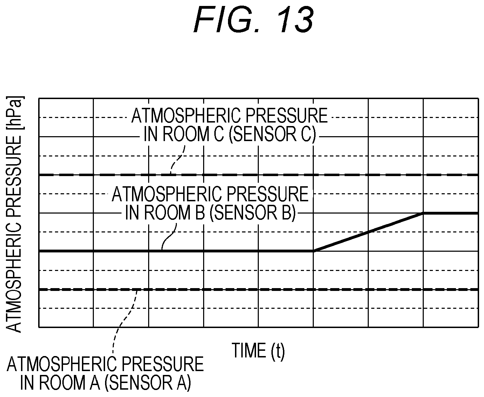

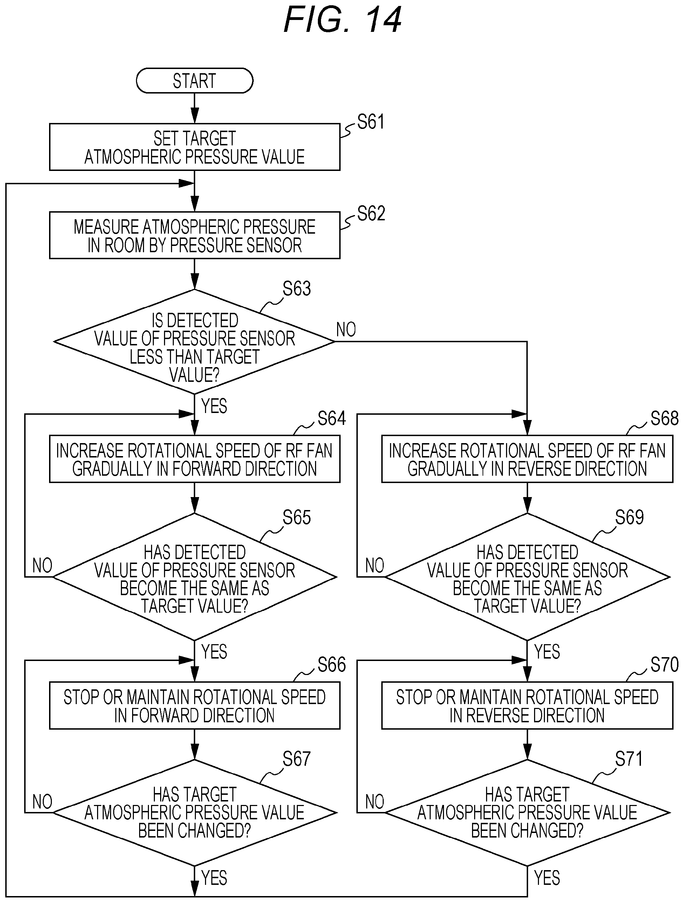

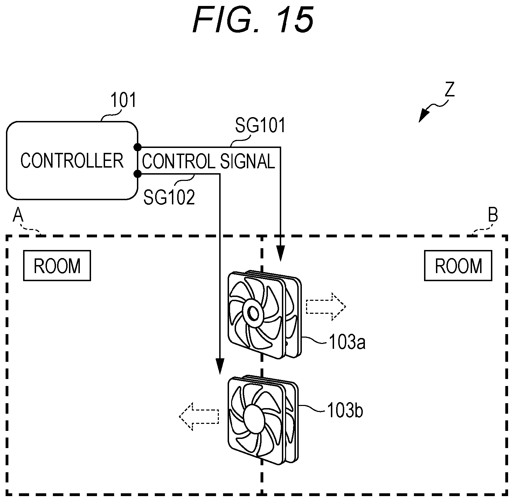

Fig. 5 illustrates an example of the configuration of a standard fan control apparatus.

In order to adjust the atmospheric pressures in a plurality of adj acent rooms A and B to be equal, using standard fans, it is necessary to place two fans 103a and 103b for air inlet and outlet between the rooms A and B, as illustrated in Fig. 5.

In other words, as in a system Z illustrated in Fig. 5, a control signal SG101 from a controller 101 to the fan 103a and a control signal SG102 from the controller 101 to the fan 103b enable driving the fans 103a and 103b alternately, which makes it possible to make the pressures and temperatures of the two rooms uniform.

However, in the above configuration, the pressure of the room cannot be controlled unless a sensor for detecting the state of the room and the fan work together.

An object of the present disclosure is to control the pressure in adjacent rooms with a simpler configuration.

According to an aspect of the present disclosure, provided is a fan control system which includes: a first sensor; a second sensor; a reversible flow (RF) fan; and a controller. The first sensor is provided in a first room, and is configured to acquire a measured value of atmospheric pressure for the first room, the second sensor is provided in a second room adjacent to the first room, and is configured to acquire a measured value of atmospheric pressure for the second room, the reversible flow (RF) fan is placed at a boundary between the first and second rooms and is configured to output an reversible flow fan rotation signal regarding its rotational speed and rotational direction, and the controller is configured to receive the measured values from each of the first and second sensors and the reversible flow fan rotational signal from the reversible fan and, with reference to received measured values and the rotational speed and rotational direction of the reversible flow fan based on received reversible flow fan rotation signal, to control the rotational speed and rotational direction of the reversible flow (RF) fan in such a manner that the measured values of the first and second sensors are the same.

According to systems of the present disclosure, it is possible to control the pressure in adjacent rooms with a fan control system having a simple configuration.

A reversible flow (RF) fan indicates a fan that can switch the wind direction by itself (hereinafter referred to as an RF fan).

The RF fan serves as both an inlet fan and an outlet fan. Accordingly, the room atmospheric pressure can be adjusted by one RF fan. As described below, a plurality of sensors and the RF fan, which are used, are controlled. Consequently, various types of automatic control become possible.

The present disclosure is described in detail with reference to the drawings.

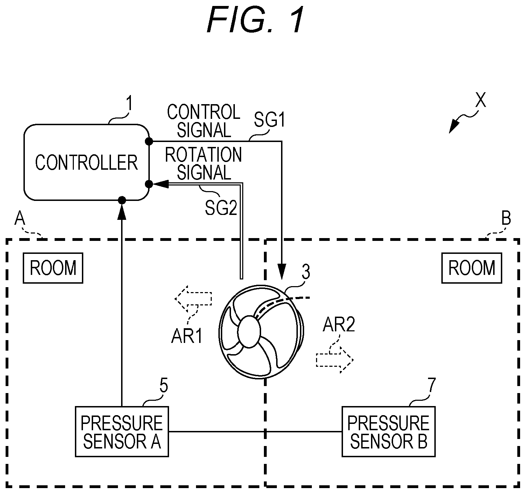

Fig. 1 illustrates an example of the configuration of a fan control system according to the present disclosure.

As illustrated in Fig. 1, a fan control system X according to the present disclosure controls an RF fan 3 placed at the boundary between a first room such as a room A and a second room adjacent to the first room, such as a room B. The RF fan 3 can switch the direction of airflow between the room A side (AR1) and the room B side (AR2). Pressure sensors A5 and B7 are placed in the rooms A and B, respectively. A measured pressure value acquired by each pressure sensor is inputted into a controller 1. Moreover, an RF fan control signal SG1 and an RF fan rotation signal SG2 are exchanged between the controller 1 and the RF fan 3. In this example, the pressure sensor A5 measures the atmospheric pressure in the room A. The pressure sensor B7 measures the atmospheric pressure in the room B. The RF fan 3 is controlled automatically in such a manner that the atmospheric pressures in the two rooms are the same.

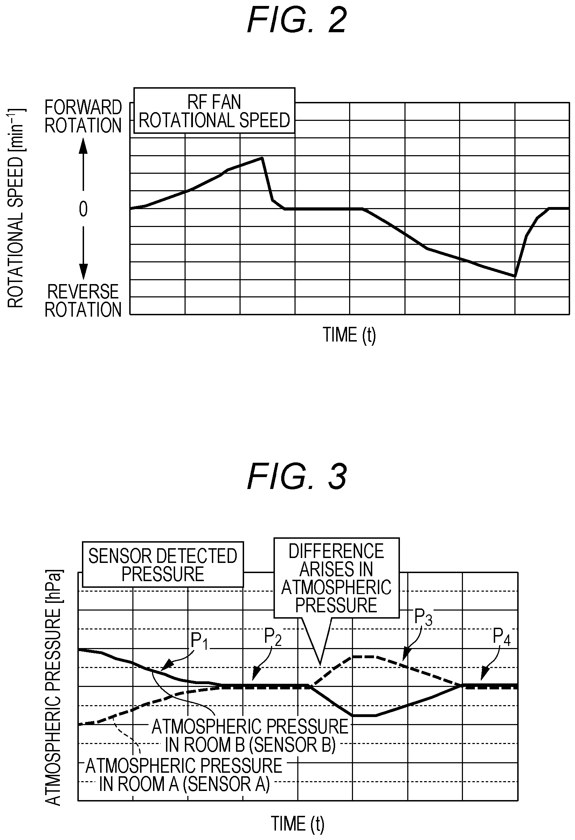

Fig. 2 illustrates an example of changes over time in the forward and reverse rotational speed of the RF fan. Fig. 2 illustrates a state where the rotational speed and rotational direction of the RF fan 3 are adjusted in such a manner that the rooms A and B are at the same atmospheric pressure when there arises a difference in atmospheric pressure between the two rooms. The rotational direction of the RF fan 3 is reversed when the rotational speed = 0.

Fig. 3 illustrates changes over time in the atmospheric pressures (hPa) measured by the pressure sensor A5 placed in the room A and the pressure sensor B7 placed in the room B. As illustrated in Fig. 3, even if there arises a difference in atmospheric pressure between the rooms A and B (for example, P1 and P3), the rotational speed of the RF fan 3 is adjusted in such a manner that the atmospheric pressures in the rooms A and B are the same (for example, P2 and P4). In other words, the controller 1 controls the rotational speed and rotational direction of the RF fan 3 in such a manner as to reduce a difference in atmospheric pressure between the rooms when the difference arises.

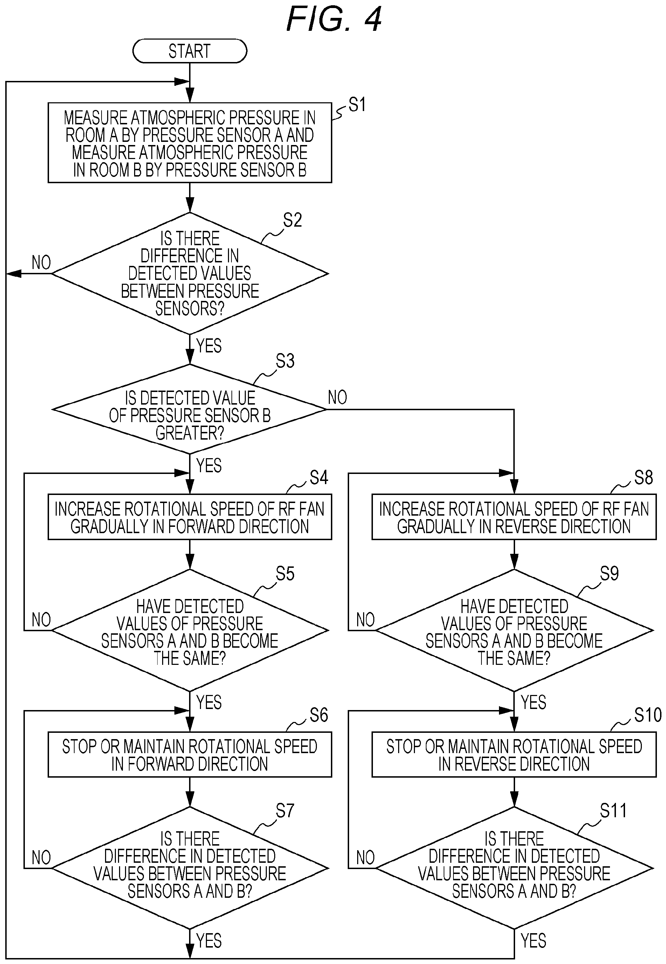

Fig. 4 is a flowchart diagram illustrating the flow of control of the RF fan 3 by the controller 1 of the fan control system according to the exemplary process.

In step S1, the process starts (Start). The pressure sensor A5 measures the atmospheric pressure in the room A. The pressure sensor B7 measures the atmospheric pressure in the room B.

In step S2, it is determined whether or not there is a difference in detected value between the pressure sensors A5 and B7. If there is no difference in detected value between the pressure sensors A5 and B7 (for example, the difference is less than a certain threshold) (NO), the control returns to step S1. If there is a difference in detected value between the pressure sensors A5 and B7 (for example, the difference is greater than the certain threshold) (YES), the control proceeds to step S3. In step S3, it is determined whether or not the detected value of the pressure sensor B7 is greater than the detected value of the pressure sensor A5.

If the determination of step S3 is YES, the control proceeds to step S4. The rotational speed of the RF fan 3 increases gradually in the forward direction (a direction of airflow from the room B to the room A).

Next, the control proceeds to step S5. The control does not proceed further until the detected values of the pressure sensors A5 and B7 become the same.

If the detected values of the pressure sensors A5 and B7 have become the same (the determination of step S5 is YES), the control proceeds to step S6. The rotational speed of the RF fan 3 in the forward direction is maintained. Alternatively, the RF fan 3 may stop. Next, in step S7, it is determined whether or not there is a difference in detected value between the pressure sensors A5 and B7. If the determination of step S7 is NO, the control returns to step S6. If the determination of step S7 is YES, the control returns to step S1.

On the other hand, if the determination of step S3 is NO, the control proceeds to step S8. The rotational direction of the RF fan 3 is reversed. The rotational speed thereof increases gradually.

Next, the control proceeds to step S9. The control does not proceed further until the detected values of the pressure sensors A5 and B7 become the same. If the detected values of the pressure sensors A5 and B7 have become the same, the control proceeds to step S10. The RF fan 3 stops, or maintains the rotational speed of the RF fan 3 in the reverse direction. Next, in step S11, it is determined whether or not there is a difference in detected value between the pressure sensors A5 and B7. If the determination of step S11 is No, the control returns to step S10. If the determination of step S11 is YES, the control returns to step S1.

With the above process, the RF fan 3 is controlled automatically to maintain the states of the two rooms A and B in such a manner that the atmospheric pressures in the two rooms are the same, as illustrated in Figs. 2 and 3.

The fan control system may be configured in such a manner that a control signal of the controller 1 and sensing signals of the sensors A5 and B7 can be controlled remotely via the Internet (network) NT with reference to the rotational speed of the RF fan 3, using, for example, a terminal 11 such as a smartphone or personal computer.

Moreover, the process of each unit may be performed by causing a computer system to read and execute a program for realizing the functions described herein, the program being recorded in a computer-readable recording medium. The "computer system" here indicates a system including an OS and hardware such as a peripheral device.

A fan control method according to the present disclosure comprises using a fan control system having: a first sensor, provided in a first room, for acquiring a measured value of atmospheric pressure for the first room; a second sensor, provided in a second room adjacent to the first room, for acquiring a measured value of atmospheric pressure for the second room; and an RF fan placed at a boundary between the first and second rooms and configured to output an reversible flow fan rotation signal regarding its rotational speed and rotational direction. The fan control method further includes a control step of controlling a rotational speed and rotational direction of the RF fan, in which the control step has the step of controlling the rotational speed and rotational direction of the RF fan in such a manner that the measured values of the first and second sensors are the same. The controlling of the rotational speed and rotational direction of the reversible fan includes referencing to the measured value from the first sensor, the measured value from the second sensor and the rotational spend and rotational direction of the reversible flow fan based on the reversible flow fan rotation signal from the reversible flow fan.

The foregoing detailed description has been presented for the purposes of illustration and description. Many modifications and variations are possible in light of the above teaching. It is not intended to be exhaustive or to limit the subject matter described herein to the precise form disclosed. Rather, the specific features and acts described above are disclosed as example forms of implementing the claims appended hereto.

## Claims

1. A fan control system (X) comprising:
a first sensor (A5);
a second sensor (B7);
a reversible flow (RF) fan (3); and
a controller (1), wherein
the first sensor is provided in a first room (A), and is configured to acquire a measured value of atmospheric pressure for the first room,
the second sensor is provided in a second room (B) adjacent to the first room, and is configured to acquire a measured value of atmospheric pressure for the second room, and wherein
the reversible flow fan is placed at a boundary between the first and second rooms and is configured to output an reversible flow fan rotation signal (SG2) regarding its rotational speed and rotational direction, and
the controller is configured to receive the measured values from each of the first and second sensors and the reversible flow fan rotational signal from the reversible flow fan and, with reference to received measured values and the rotational speed and rotational direction of the reversible flow fan based on received reversible flow fan rotation signal, to control the rotational speed and rotational direction of the reversible flow fan in such a manner that the measured values of the first and second sensors are the same.

2. A fan control method comprising:
using a fan control system (X); and
controlling a rotational speed and rotational direction of an reversible flow fan (3) in such a manner that measured values of a first and a second sensor (A5, B7) are the same, wherein
the fan control system includes the first sensor (A5), the second sensor (B7), and the reversible flow fan (3),
the first sensor is provided in a first room (A), and is configured to acquire a measured value of atmospheric pressure for the first room,
the second sensor is provided in a second room (B) adjacent to the first room, and is configured to acquire a measured value of atmospheric pressure for the second room, and
the reversible flow fan is placed at a boundary between the first and second rooms and is configured to output an reversible flow fan rotation signal (SG2) regarding its rotational speed and rotational direction; and wherein
the controlling of the rotational speed and rotational direction of the reversible flow fan includes referencing to the measured value from the first sensor, the measured value from the second sensor and the rotational speed and rotational direction of the reversible flow fan based on the reversible flow fan rotation signal from the reversible flow fan.

## Patentansprüche

1. Lüfter-Steuerungssystem (X), das Folgendes umfasst:
einen ersten Sensor (A5);
einen zweiten Sensor (B7);
ein Umkehr-Lüfter (3) mit reversibler Strömung (RF); und
eine Steuerung (1), wobei
der erste Sensor in einem ersten Raum (A) vorgesehen ist und so konfiguriert ist, dass er einen Messwert des atmosphärischen Drucks für den ersten Raum erfasst,
der zweite Sensor in einem zweiten, an den ersten Raum angrenzenden Raum (B) vorgesehen ist und so konfiguriert ist, dass er einen Messwert des atmosphärischen Drucks für den zweiten Raum erfasst, und wobei
der Umkehr-Lüfter an einer Grenze zwischen dem ersten und dem zweiten Raum angeordnet ist und so konfiguriert ist, dass er ein Umkehr-Lüfter-Rotationssignal (SG2) bezüglich seiner Rotationsgeschwindigkeit und Rotationsrichtung ausgibt, und
die Steuerung so konfiguriert ist, dass sie die Messwerte von jedem der ersten und zweiten Sensoren und das Umkehr-Lüfter-Rotationssignal von dem Umkehr-Lüfter empfängt und unter Bezugnahme auf die empfangenen Messwerte und die Rotationsgeschwindigkeit und die Rotationsrichtung des Umkehr-Lüfters auf der Grundlage des empfangenen Umkehr-Lüfter-Rotationssignals die Rotationsgeschwindigkeit und die Rotationsrichtung des Umkehr-Lüfters so steuert, dass die Messwerte der ersten und zweiten Sensoren gleich sind.

2. Verfahren zur Lüfter-Steuerung, das Folgendes umfasst:
ein Verwenden eines Lüfter-Steuerungssystems (X); und
ein Steuern einer Rotationsgeschwindigkeit und Rotationsrichtung eines Umkehr-Lüfters (3) derart, dass Messwerte eines ersten und eines zweiten Sensors (A5, B7) gleich sind, wobei
das Lüfter-Steuerungssystem den ersten Sensor (A5), den zweiten Sensor (B7) und den Umkehr-Lüfter (3) umfasst,
der erste Sensor in einem ersten Raum (A) vorgesehen ist und so konfiguriert ist, dass er einen Messwert des atmosphärischen Drucks für den ersten Raum erfasst,
der zweite Sensor in einem zweiten Raum (B) vorgesehen ist, der an den ersten Raum angrenzt, und so konfiguriert ist, dass er einen Messwert des atmosphärischen Drucks für den zweiten Raum erfasst, und
der Umkehr-Lüfter an einer Grenze zwischen dem ersten und dem zweiten Raum angeordnet ist und so konfiguriert ist, dass er ein Umkehr-Lüfter-Rotationssignal (SG2) bezüglich seiner Rotationsgeschwindigkeit und Rotationsrichtung ausgibt; und wobei
die Steuerung der Rotationsgeschwindigkeit und der Rotationsrichtung des Umkehr-Lüfters die Bezugnahme auf den Messwert des ersten Sensors, den Messwert des zweiten Sensors, die Rotationsgeschwindigkeit und die Rotationsrichtung des Umkehr-Lüfters auf der Grundlage des Rotationssignals des Umkehr-Lüfters umfasst.

## Revendications

1. Système de commande de ventilateur (X) comprenant :
un premier capteur (A5) ;
un deuxième capteur (B7) ;
un ventilateur à flux réversible (RF, « *reversible flow* ») (3) ; et
un organe de commande (1), dans lequel
le premier capteur est prévu dans une première pièce (A), et est configuré pour acquérir une valeur mesurée de pression atmosphérique pour la première pièce,
le deuxième capteur est prévu dans une deuxième pièce (B) adjacente à la première pièce, et est configuré pour acquérir une valeur mesurée de pression atmosphérique pour la deuxième pièce, et dans lequel
le ventilateur à flux réversible est placé au niveau d'une limite entre les première et deuxième pièces et est configuré pour délivrer en sortie un signal de rotation de ventilateur à flux réversible (SG2) concernant ses vitesse de rotation et direction de rotation, et
l'organe de commande est configuré pour recevoir les valeurs mesurées provenant de chacun des premier et deuxième capteurs et le signal de rotation de ventilateur à flux réversible provenant du ventilateur à flux réversible et, en rapport à des valeurs de mesure reçues et à la vitesse de rotation et direction de rotation du ventilateur à flux réversible sur la base du signal de rotation de ventilateur à flux réversible reçu, pour commander la vitesse de rotation et la direction de rotation du ventilateur à flux réversible de telle manière que les valeurs mesurées des premier et deuxième capteurs soient les mêmes.

2. Procédé de commande de ventilateur comprenant :
le fait d'utiliser un système de commande de ventilateur (X) ; et
le fait de commander une vitesse de rotation et direction de rotation d'un ventilateur à flux réversible (3) de telle manière que des valeurs mesurées d'un premier et d'un deuxième capteurs (A5, B7) soient les mêmes, dans lequel
le système de commande de ventilateur inclut le premier capteur (A5), le deuxième capteur (B7), et le ventilateur à flux réversible (3),
le premier capteur est prévu dans une première pièce (A), et est configuré pour acquérir une valeur mesurée de pression atmosphérique pour la première pièce,
le deuxième capteur est prévu dans une deuxième pièce (B) adjacente à la première pièce, et est configuré pour acquérir une valeur mesurée de pression atmosphérique pour la deuxième pièce, et
le ventilateur à flux réversible est placé au niveau d'une limite entre les première et deuxième pièces et est configuré pour délivrer en sortie un signal de rotation de ventilateur à flux réversible (SG2) concernant ses vitesse de rotation et direction de rotation ; et dans lequel
le fait de commander la vitesse de rotation et direction de rotation du ventilateur à flux réversible inclut le fait de mettre en rapport la valeur mesurée provenant du premier capteur, la valeur mesurée provenant du deuxième capteur et la vitesse de rotation et direction de rotation du ventilateur à flux réversible sur la base du signal de rotation de ventilateur à flux réversible provenant du ventilateur à flux réversible.
